# EUROPEAN PATENT APPLICATION

(11) **EP 4 406 856 A1**
(43) Date of publication of application: **31.07.2024**
(21) Application number: 24154537.5
(22) Date of filing: 29.01.2024
(51) Int. Cl.: B64D 37/30, F02C 3/22

(54) **RELIQUIFICATION OF BOIL OFF GAS AT AIRPORT GATE**

(30) Priority: 27.01.2023 US 202318102295
(71) Applicant: RTX Corporation, Farmington, CT 06032 (US)
(72) Inventor: TERWILLIGER, Neil J., Cheshire, 06410 (US); MULDOON, Marc J., Marlborough, 06447 (US)
(74) Representative: Dehns

(57) **Abstract**

A cryogenic fueled aircraft propulsion system includes a core engine (22) that generates a high energy exhaust gas flow, a fuel system (30) that is configured to supply a fuel to the core engine (22), a cryogenic fuel tank (32) that is configured to maintain fuel in a liquid phase during aircraft operating conditions, a gas collection system (34) where boil off gas from the cryogenic fuel tank (32) is collected, and a fuel reliquification system (36) where collected boil off gas from the cryogenic fuel tank (32) is transformed into a liquid phase.

## Description

### TECHNICAL FIELD

The present invention relates generally to an alternate fuel turbine engine for aircraft and more specifically to a system and means of reprocessing cryogenic gaseous fuel into liquid form during times of inactivity.

### BACKGROUND

Reduction and/or elimination of carbon emissions generated by aircraft operation is a stated goal of aircraft manufacturers and airline operators. Alternate fuels have been proposed including ammonia, hydrogen and liquid natural gas. Some alternate fuels require storage at temperatures well below ambient conditions to maintain them in a liquid form. Accordingly, aircraft will include operating systems that provide the required pressures and temperatures to maintain the fuel in desired phase during flight operation. However, during periods where the aircraft is not operating, such as during loading of passengers or extended layovers, some boil off of the fuels may occur. The boil off can be significant and result in substantial fuel loss and thereby incur additional costs.

Turbine engine manufacturers continue to seek further improvements to engine performance including improvements to reduce environmental impact while improving propulsive efficiencies.

### SUMMARY

A cryogenic fueled aircraft propulsion system according to a first aspect of the invention includes a core engine that generates a high energy exhaust gas flow, a fuel system that is configured to supply a fuel to the core engine, a cryogenic fuel tank that is configured to maintain fuel in a liquid phase during aircraft operating conditions, a gas collection system where boil off gas from the cryogenic fuel tank is collected, and a fuel reliquification system where collected boil off gas from the cryogenic fuel tank is transformed into a liquid phase.

In an embodiment of the foregoing, the gas collection system is mounted within the aircraft.

In a further embodiment of any of the foregoing, the fuel liquification system is mounted onboard the aircraft and is configured for communicating liquid fuel back to the cryogenic fuel tank onboard the aircraft.

In a further embodiment of any of the foregoing, the fuel liquification system is configured to operate in response to collection of a predefined buildup of boil off gas in the gas collection system.

In a further embodiment of any of the foregoing, the cryogenic fueled aircraft propulsion system includes an externally accessible power connection for communicating power from an aircraft external source to the reliquification system, cryogenic fuel tank and the gas collection system.

In a further embodiment of any of the foregoing, the cryogenic fuel includes one of hydrogen, ammonia or a liquid natural gas.

In a further embodiment of any of the foregoing, the core engine includes a compressor section where compressed air is communicated to a combustor section, mixed with a fuel and ignited to generate a high energy gas flow that is expanded through a turbine section.

A cryogenic fuel system for an aircraft according to another aspect of the invention includes a cryogenic fuel storage system where fuel is stored in a liquid phase, a gas collection system where boil off gas is collected, and an aircraft mounted fuel reliquification system where collected boil off gas is transformed into a liquid phase and communicated to the cryogenic fuel storage system.

In an embodiment of the foregoing, the cryogenic fueling system for an aircraft includes a power coupling for communicating power from a power system external to the aircraft to the fuel reliquification system.

In a further embodiment of any of the foregoing, the power system is configured for providing power independent of an aircraft mounted power source to power the aircraft fuel system, the gas collection system and the fuel reliquification system.

In a further embodiment of any of the foregoing, an aircraft mounted power source is configured to provide power to the aircraft fuel system and the gas collection system and the power system external to the aircraft is configured to provide power to the fuel reliquification system.

In a further embodiment of any of the foregoing, a controller is programmed to operate the fuel reliquification system as needed in response to a predefined buildup of boil off gases in the gas collection system..

In a further embodiment of any of the foregoing, a controller is programmed to operate the fuel reliquification system to tailor reliquification to a rate at which the boil off gas is generated.

In a further embodiment of any of the foregoing, the fuel includes one of hydrogen, ammonia or liquid natural gas.

A method of recovering boil off gases from aircraft cryogenic fuel system according to another aspect of the invention includes collecting boil off gases from a cryogenic fuel tank of an aircraft, communicating the collected boil off gases to a reliquification system, and transforming the collected boil off gases into a liquid phase of the cryogenic fuel with a reprocessing system that is powered by a power source independent of the aircraft.

In an embodiment of the foregoing, the reprocessing system is located within the aircraft and is powered with a ground-based power source and transforming the collected boil off gases is performed onboard the aircraft.

In a further embodiment of any of the foregoing, the method further includes initiating transformation of the collected boil off gases into the liquid phase in response to a predefined buildup of boil off gas.

In a further embodiment of any of the foregoing, the method further includes tailoring the transformation of the collected boil off gases into the liquid phase to a rate at which a liquid fuel boils off into the gas form.

In a further embodiment of any of the foregoing, transforming the collected boil off gases is performed in response to inactivity of engines of the aircraft.

In a further embodiment of any of the foregoing, the method includes communicating the cryogenic liquid fuel to the aircraft fuel tank.

Although the different examples have the specific components shown in the illustrations, embodiments of this invention are not limited to those particular combinations. It is possible to use some of the components or features from one of the examples in combination with features or components from another one of the examples.

These and other features disclosed herein can be best understood from the following specification and drawings, the following of which is a brief description.

### BRIEF DESCRIPTION OF THE DRAWINGS

Figure 1 is a schematic view of a schematic view of an example aircraft cryogenic fueling system.
Figure 2 is a flow chart of an example method of recovering boil off cryogenic fuel from a cryogenic fuel powered aircraft.

### DETAILED DESCRIPTION

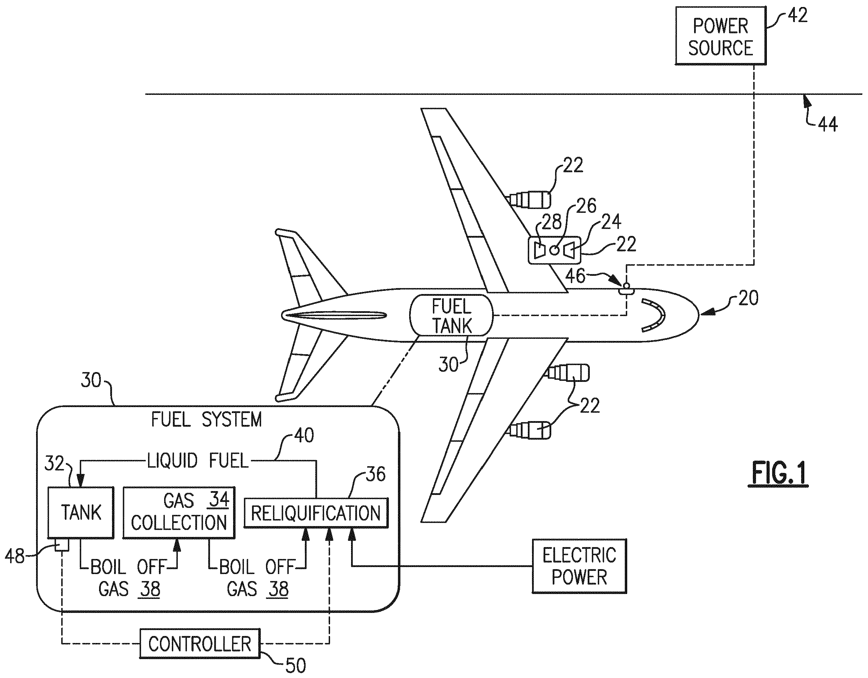

Figure 1 schematically illustrates an aircraft 22 disposed at a gate 44 or other aircraft parking area. The replacement of hydrocarbon fuels with alternate fuels such as hydrogen provide a potential for significant reduction carbon emissions. However, most alternate fuels exist in a gaseous phase at typical ambient pressures and temperatures. Accordingly, low temperatures are required for storage in a liquid phase. Such cryogenic fuels are stored in a liquid phase on-board the aircraft 20.

Maintaining the cryogenic fuel in liquid form requires systems to maintain temperatures well below ambient temperatures. Even with such cryogenic systems, some amount of the liquid fuel changes phase into a gaseous form during aircraft operation. An aircraft fuel system 30 distributes fuel to the engines 22 and includes features that accommodate and use the gaseous fuel during aircraft operation. However, when the aircraft 20 is not operating such as during passenger loading and unloading and/or an extended period of down time at a gate 44 or other aircraft parking area, the cryogenic fuel will continue to boil off at some rate. Depending on ambient conditions and the duration of the down time, losses of fuel due to transformation of the liquid fuel to gaseous form can be significant. The example disclosed aircraft fuel system 30 collects the boil off gas fuel and liquifies the collected gases fuel for storage and eventual reuse.

The example aircraft 20 includes cryogenic fueled turbine engines 22. Each of the turbine engines 22 include a compressor section 24, combustor section 26 and a turbine section 28 in flow series. Inlet air is compressed in the compressor section 24 and communicated to the combustor section 26 for mixing with a cryogenic fuel and ignited to generate a high energy gas flow that expands through the turbine section 28 to drive the compressor 24 and a propulsor. The aircraft 20 includes a fuel system 30 that distributes cryogenic fuel to each of the engines 22. In one example embodiment, the cryogenic fuel is a hydrogen-based fuel. The hydrogen-based fuel may be hydrogen and/or be derived from hydrogen containing compounds such as ammonia. In another example embodiment, the fuel is a liquid natural gas. It should be appreciated that although hydrogen, ammonia and liquid natural gas are disclosed by way of example, other cryogenic fuels are within the scope and contemplation of this disclosure.

The example disclosed fuel system 30 includes a cryogenic fuel tank 32, a gas collection system 34 and a fuel reliquification system 36. The gas collection system 34 contains boil off gas from the fuel system 30 and the fuel tank 32 and communicates the gaseous phase fuel to the reliquification system 36. The example reliquification system 36 is part of the aircraft fuel system 30 onboard the aircraft 20.

In one example disclosed embodiment, the reliquification system 36 disposed on the aircraft 20 is powered through an electrical coupling 46 to a land based power source 42. The electrical coupling 46 is provided at an externally accessible location of the aircraft 20. Power may also be utilized from the aircraft 20, however, such power use is limited during periods where the engines 22 are not operating.

The example disclosed reliquification system 36 includes a controller 50 for operating components and systems for generating temperatures and pressures needed to transform the gaseous fuel into liquid form. Such components and systems may include refrigeration systems, compression systems and any corresponding sensing and control systems. Once the gaseous fuel is transformed into the liquid phase, the liquid fuel 40 is communicated back to the tank 32.

The controller 50 is programmed to operate the reliquification system 36 in response to a predetermined threshold condition. The predetermined threshold condition may be a sensed pressure, temperature or some other condition that is indictive of the presence of boil off gases in a quantity that warrants processing according to a predefined criterion. In one disclosed example, a pressure sensor 48 is provided to communicate information to the controller 50 that is indicative of the buildup of boil off gases that warrant operation of the reliquification system 36. Although a pressure sensor 48 is disclosed by way of example, other sensors and measurement devices that provide information indicative of a buildup of boil off gases could be utilized and is within the scope and contemplation of this disclosure.

The controller 50 is programmed to operate the reliquification system 36 to operate based on current conditions and the built up of boil off gases. The amount of boil off gas build up many be minimal in some operation conditions and therefore not warrant operation. Moreover, operation of the reliquification system 34 may not be continuous, but instead based on current measured conditions or may be run at predefined intervals for a specific set of ambient and/or engine operation conditions.

The example controller 50 is a device and system for performing necessary computing or calculation operations. The example controller 50 may be specially constructed for this purpose, or it may comprise at least a general-purpose computer selectively activated or reconfigured by a computer program stored in the computer. The controller 50 may further be a dedicated to power generation by the fuel cell, or may be a program stored on an engine or aircraft controller.

The controller 50 may include a computer program directing operation. Such a computer program and also data required for its execution may be stored in a computer readable storage medium, such as, but is not limited to, any type of disk including floppy disks, optical disks, CD-ROMs, magnetic-optical disks, read-only memories (ROMs), random access memories (RAMS), EPROMs, EEPROMs, magnetic or optical cards, application specific integrated circuits (ASICs), or any type of media suitable for storing electronic instructions, and each coupled to a computer system bus. Furthermore, the computer referred to may include a single processor or may be architectures employing multiple processor designs for increased computing capability.

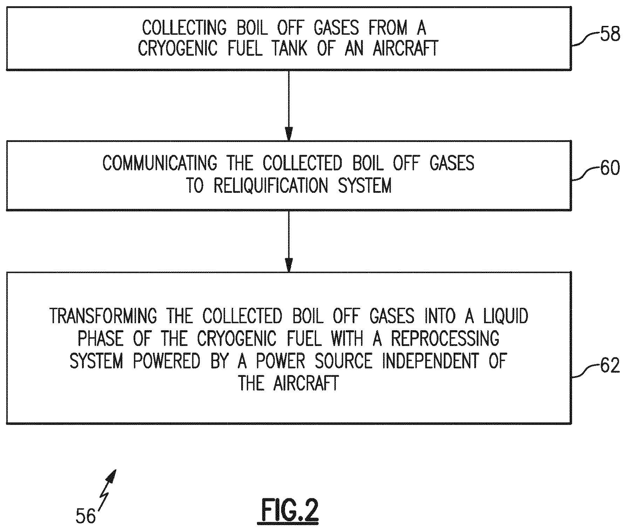

Referring to Figure 2, with continued reference to Figure 1, a process of capturing and transforming gaseous phase fuel is schematically shown and indicated at 56. In one example operational embodiment, the aircraft 20 is provided with a fuel system 30 that includes a gas collection system 34 and a reliquification system 36. An initial process step includes collecting the boil off gases as indicated at 58. The gas collection system 34 includes conduits and relief valves that contain released boil off gases 38. Once collected, the released gases are communicated to the reliquification system 36 onboard the aircraft 20 as indicated at 60. A fixed conduit may be provided between the gas collection system 34 and the onboard reliquification system 36.

The boil off gases are then transformed into a liquid phase using power provided from a ground based power source as indicated at 62. As appreciated, during periods of aircraft inactivity, the engines 22 are not producing power. Accordingly, a ground based power source 42 provides the power needed to operate the onboard reliquification system 36. The reliquification system may be an integral system onboard the aircraft as schematically shown at 36. In the example system embodiments, power to perform the phase transformation is provided by the ground based power source 42.

The process of collecting and transforming boil off gases 38 into liquid fuel may operate continuously while the aircraft 20 is at the gate 44 or other aircraft parking area. The process of collecting boil off gases and transforming boil off gases 38 may also operate as needed in response to a predefined buildup of boil off gases. The specific operating frequency and duration may be tailored to current operating conditions and the rate at which the liquid fuel transforms into a gas form.

The disclosed systems provide for the collection of boil off gases in order to prevent substantial losses in both energy and gas from an aircraft fuel system.

Although an example embodiment has been disclosed, a worker of ordinary skill in this art would recognize that certain modifications would come within the scope of this disclosure. For that reason, the following claims should be studied to determine the scope and content of this disclosure.

## Claims

1. A cryogenic fueled aircraft propulsion system comprising:
a core engine (22) generating a high energy exhaust gas flow;
a fuel system (30) configured to supply a fuel to the core engine (22);
a cryogenic fuel tank (32) configured to maintain fuel in a liquid phase during aircraft operating conditions;
a gas collection system (34) where boil off gas from the cryogenic fuel tank (32) is collected; and
a fuel reliquification system (36) where collected boil off gas from the cryogenic fuel tank (32) is transformed into a liquid phase.

2. The cryogenic fueled aircraft propulsion system of claim 1, wherein the gas collection system (34) is mounted within the aircraft (20).

3. The cryogenic fueled aircraft propulsion system of claim 1 or 2, wherein the fuel reliquification system (36) is mounted onboard the aircraft (20) and is configured for communicating liquid fuel (40) back to the cryogenic fuel tank (32) onboard the aircraft (20).

4. The cryogenic fueled aircraft propulsion system of any preceding claim, wherein the fuel reliquification system (36) is configured to operate in response to collection of a predefined buildup of boil off gas in the gas collection system (34).

5. The cryogenic fueled aircraft propulsion system of any preceding claim, including an externally accessible power connection for communicating power from an aircraft external source to the fuel reliquification system (36), cryogenic fuel tank (32) and the gas collection system (34).

6. The cryogenic fueled aircraft propulsion system of any preceding claim, wherein the core engine (22) includes a compressor section (24) and a combustor section (26), wherein compressed air from the compressor section (24) is communicated to the combustor section (26) and then mixed with a fuel and ignited to generate a high energy gas flow that is expanded through a turbine section (28).

7. A cryogenic fuel system (30) for an aircraft (20), the cryogenic fuel system (30) comprising:
a cryogenic fuel storage system (32) where fuel is stored in a liquid phase;
a gas collection system (34) where boil off gas is collected; and
an aircraft mounted fuel reliquification system (36) where collected boil off gas is transformed into a liquid phase and communicated to the cryogenic fuel storage system, and optionally further comprising:
a controller (50) programmed to operate the fuel reliquification system (36):
as needed in response to a predefined buildup of boil off gases in the gas collection system (34); and/or
to tailor reliquification to a rate at which the boil off gas is generated.

8. The cryogenic fuel system for an aircraft (20) of claim 8, including a power coupling (46) for communicating power from a power system external to the aircraft (20) to the fuel reliquification system (36), wherein optionally:
the power system is configured for providing power, independent of an aircraft mounted power source, to the cryogenic fuel storage system (32), the gas collection system (34) and the fuel reliquification system (36); or
an aircraft mounted power source is configured to provide power to the cryogenic fuel storage system (32) and the gas collection system (34), and the power system external to the aircraft (20) is configured to provide power to the fuel reliquification system (36).

9. The cryogenic fueled aircraft propulsion system, or the cryogenic fuel system for an aircraft (20), of any preceding claim, wherein the fuel comprises hydrogen, ammonia or liquid natural gas.

10. A method of recovering boil off gases from aircraft cryogenic fuel system (30), the method comprising:
collecting boil off gases from a cryogenic fuel tank (32) of an aircraft (20);
communicating the collected boil off gases to a reliquification system (36); and
transforming the collected boil off gases into a liquid phase of the cryogenic fuel with a reprocessing system powered by a power source independent of the aircraft (20).

11. The method of claim 10, wherein the reprocessing system is located within the aircraft (20) and powered with a ground-based power source (42) and transforming the collected boil off gases is performed onboard the aircraft (20).

12. The method of claim 10 or 11, further comprising initiating transformation of the collected boil off gases into the liquid phase in response to a predefined buildup of boil off gas.

13. The method of any of claims 10 to 12, further comprising tailoring the transformation of the collected boil off gases into the liquid phase to a rate at which a liquid fuel (40) boils off into the gas form.

14. The method of any of claims 10 to 13, wherein transforming the collected boil off gases is performed in response to inactivity of engines (22) of the aircraft (20).

15. The method of any of claims 10 to 14, including communicating the cryogenic liquid fuel (40) to the aircraft fuel tank (32).
